# EUROPÄISCHE PATENTSCHRIFT

(11) **EP 0 609 641 B1**
(45) Veröffentlichungstag und Bekanntmachung des Hinweises auf die Patenterteilung: **29.10.1997**
(21) Anmeldenummer: 93810068.2
(22) Anmeldetag: 04.02.1993
(51) Int. Cl.: C02F 3/12, C02F 3/30, C02F 1/52

(54) **Anlage und Verfahren zum weitergehenden Reinigen von Ablaufwasser aus einer biologischen Kläranlage**
Plant and process for advanced purification of effluent water from a biological sewage treatment plant
Installation et procédé pour la purification poussée de l'eau déchargée d'une installation de clarification biologique

(43) Veröffentlichungstag der Anmeldung: 10.08.1994
(73) Patentinhaber: CT Umwelttechnik AG, CH-8404 Winterthur (CH)
(72) Erfinder: Schmidt, Rolf, W-6310 Grünberg-Queckborn (DE)
(74) Vertreter: Heubeck, Bernhard

(56) Entgegenhaltungen:
- DE-A- 2 828 115
- US-A- 4 076 615
- PATENT ABSTRACTS OF JAPAN vol. 13, no. 3 (C-557)(3351) 6. Januar 1989, Fachzeitschriftenverlag, Mainz-Wiesbaden
- HELMER R., SEKOULOV I. 'WEITERGEHENDE ABWASSERREINIGUNG' 1977 , DEUTSCHER

## Beschreibung

Die Erfindung betrifft eine Anlage und ein Verfahren zum weitergehenden Reinigen von Wasser, das Ammonium sowie Schwebestoffe und/oder Phosphat und/oder Stoffe mit biologisch/chemisch abbaubarem Kohlenstoff enthält.

Bei bestehenden Kläranlagen (die den heutigen Anforderungen voll entsprechen) enthält das gereinigte Wasser im Ablauf der Nachklärung im allgemeinen noch beträchtliche Mengen an Ammonium (bis 8 mg/l), Phosphat (bis 3 mg/l) und CSB (chemischer Sauerstoffbedarf, bis 80 mg/l); auch Schwebestoffe werden mit dem Ablaufwasser mitgeführt. Es ist bekannt, eine weitergehende Abwasserreinigung, insbesondere durch "Restnitrifikation" und Elimination von CSB, mittels biologisch intensivierter Raumfiltration (Biofiltration) auszuführen. Dabei findet simultan in einer Stufe der biologische Prozess und die Filtration statt, d.h. sowohl der biologische Abbau des Ammoniums (Restnitrifikation) als auch das Rückhalten von Feststoffen, wobei die Feststoffe als Schwebestoffe vorliegen sowie als Partikel, die aufgrund von Fällungsprozessen entstanden sein können. Die Biofilter müssen periodisch gespült werden. Je grösser der Feststoffanteil ist, desto öfter muss gespült werden. Das Spülen bedeutet einen Verlust an Nitrifikanten und somit eine Beeinträchtigung der Restnitrifikation. Gleichzeitig erhöht sich die Spülabwassermenge.

Es ist daher Aufgabe der Erfindung, eine Anlage der eingangs genannten Art zu schaffen, bei der die Restnitrifikation durch die Filtration der Feststoffe nicht beeinträchtigt wird, wobei die Feststofffracht insbesondere in Form von Schwebestoffe aus der Nachklärung und von ausgefälltem Phosphat (Fällung mit Metallsalzen) sowie suspendiertem Adsorptionsmittel (insbesondere Aktivkohlepartikeln) vorliegt.

Diese Aufgabe wird erfindungsgemäss durch eine Anlage mit einer Einrichtung gelöst, deren Merkmale im Anspruch 1 genannt sind. Auf vorteilhafte Ausführungsformen und Weiterbildungen der erfindungsgemässen Einrichtung beziehen sich die abhängigen Ansprüche; dabei betrifft Anspruch 7 eine Bauform der Einrichtung, die eine kompakte Anordnung und bautechnisch vorteilhafte Konstruktion ermöglicht. Die Ansprüche 10 bis 12 schliesslich sind auf das erfindungsgemässe Verfahren gerichtet.

Das Ablaufwasser aus Nachklärbecken einer bestehenden Kläranlage, das weitgehend biologisch vorgereinigt ist (beispielsweise mittels eines Belebtschlamm-Verfahrens), wird in die erfindungsgemässe Einrichtung geleitet. Dort wird das Wasser mit Belebtschlamm - nachstehend "Kontaktschlamm" genannt - eines gesonderten Schlammkreislaufs, welcher Nitrifikanten aufweist, vermischt. In einem Reaktionsraum, der mit Vorteil in mehrere Kammern kaskadenartig unterteilt ist, erfolgt eine Nitrifikation (= Restnitrifikation) unter Belüftung und Umwälzung beispielsweise mittels einer Vielzahl von Rohrbelüftern. Gleichzeitig werden neue Trägerpartikel für die Nitrifikanten erzeugt, indem eine Lösung von Eisen- und/oder Aluminiumsalzen in den Reaktionsraum eingespeist wird. Diese Metallsalze fällen Phosphat aus und bilden dabei neue Trägerpartikel für die Nitrifikanten aus. Auch durch Zugabe von Adsorbentien erhöht sich die Zahl solcher Trägerpartikel. Das behandelte Gemisch wird - nach Ausflockung der Schlammpartikel - durch Sedimentation getrennt und zwar in Kontaktschlamm, der teilweise in den Reaktionsraum der Einrichtung rückgeführt wird, und in Klarwasser, das filtriert wird. Das Spülabwasser der Filtration wird auch in den Reaktionsraum rezirkuliert.

Das durch die erfindungsgemässe Einrichtung ermöglichte Verfahren hat gegenüber der Biofiltration mehrere Vorteile:
- Das bei der Filtration anfallende Spülabwasser führt zu keiner zusätzlichen Belastung der bestehenden Kläranlage. Denn das Spülabwasser bleibt dank Rückführung in der erfindungsgemässen Einrichtung.
- Dank der Zweistufigkeit des Verfahrens kann in Abhängigkeit von der variablen Zusammensetzung der Inhaltsstoffe des Abwassers flexibel und gezielt auf den Bedarf an Fällungs-, Adsorptions- und Flockungshilfsmittel reagiert werden. Dabei bleibt eine beeinträchtigende Wechselwirkung zwischen der reaktiven Phase und der Filtration aus.
- Bei Vorliegen einer erhöhten Feststofffracht im Ablauf der Nachklärung wird diese durch die erfindungsgemässe Einrichtung abgefangen, wobei die Filtereinrichtung zusätzlich nur unwesentlich belastet wird. Daher ergibt sich eine hohe Betriebssicherheit.
- Der sich ausbildende Überschuss an Kontaktschlamm kann mit Vorteil in die Kläranlage rückgeführt werden, beispielsweise in ein Vorklärbecken oder in ein Belebungsbecken. Wegen relativ geringen CSB-Werten wird die Aktivkohle in der erfindungsgemässen Einrichtung nur beschränkt beladen, sodass bezüglich den höhern CSB-Werten im Vorklärbecken noch eine beträchtliche Aufnahmekapazität vorhanden ist. Durch die Rückführung von Nitrifikanten verbessert sich die Nitrifikationskapazität im Belebungsbecken. Ferner verbessert der rückgeführte Kontaktschlamm, der ein Fällungsschlamm ist, die Absetzeigenschaften des Belebtschlamms.

Durch die erfindungsgemässe Einrichtung wird (bei 5°C) eine Elimination von Ammonium, Phosphat und CSB bis unter 2 mg/l, 1 mg/l bzw. 30 mg/l möglich.

Nachfolgend wird die Erfindung im Zusammenhang mit den Zeichnungen näher erläutert. Es zeigen:
- Fig. 1: eine erfindungsgemässe Einrichtung in schematischer Darstellung,
- Fig. 2: eine perspektivische Ansicht eines zylindrischen Behälters, der eine kompakte Anordnung der erfindungsgemässen Einrichtung ermöglicht,
- Fig. 3: eine erste Variante einer erfindungsgemässen Einrichtung mit zusätzlicher Denitrifikationsstufe und
- Fig. 4: eine zweite Variante einer solchen Einrichtung.

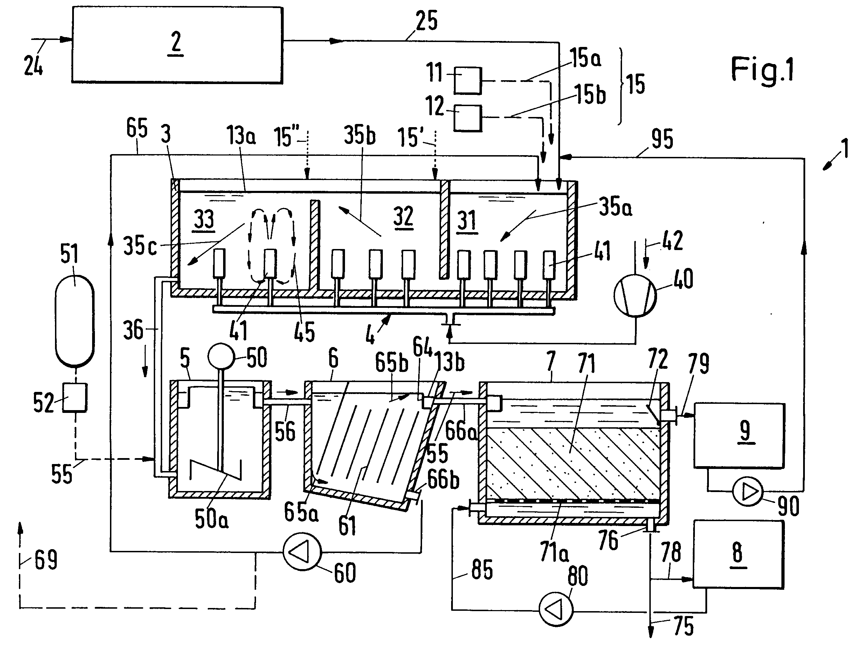

Der in Fig.1 dargestellten erfindungsgemässen Einrichtung 1 wird aus einem Nachklärbecken 2 über den Nachlauf 25 Abwasser zugeführt, das weitgehend biologisch vorgereinigt ist. Das Nachklärbecken 2 ist über den Zulauf 24 einer nicht gezeigten Kläranlage nachgeschaltet. Die Einrichtung 1 umfasst folgende Komponenten: einen belüfteten Reaktionsraum 3 mit einer Belüftungsvorrichtung 4 (Gebläse 40), einen Flockungsraum 5 (Rührer 50a, Antrieb 50), einen Trennraum 6 (Lamellen 61) zum Separieren von Kontaktschlamm und Klarwasser, eine Rückführung 65 (Schlammpumpe 60) des Kontaktschlamms in den Zulauf des Reaktionsraums 3, eine Filtereinrichtung 7 für das Klarwasser und eine Rückführung 95 (Pumpe 90), mittels der Spülabwasser aus dem Reservoir 9 in den Reaktionsraum 3 förderbar ist.

Im dargestellten Ausführungsbeispiel setzt sich der Reaktionsraum 3 aus drei kaskadenartig angeordneten Kammern 31, 32 und 33 zusammen. Der Transport des Gemisches von Kontaktschlamm und Wasser ist durch die Pfeile 35a, 35b und 35c angedeutet. Mittels Rohrbelüftern 41 wird Umgebungsluft (Pfeil 42) in das Gemisch eingeblasen und gleichzeitig für eine Umwälzung (Pfeile 45) gesorgt. Eine Lösung 15a mit Fällungsmittel und eine Suspension 15b mit Adsorptionsmittel (Aktivkohle) wird mittels Dosiervorrichtungen 11 und 12 in den Zulauf des Reaktionsraums 3 eingespeist. Die Fällungsmittel, bestehend aus Eisen- und/oder Aluminiumsalzen, bilden dabei auf bekannte Weise Hydroxidverbindungen, wobei vorhandene Feststoffe (beispielsweise Kohlepartikel, Bakterien) in grössere Agglomerate eingebunden werden. Das im Abwasser vorhandene Phosphat wird mit den Metallsalzen z.B. als FePO₄ oder als AlPO₄ ausgefällt. Der nach der Passage der Kläranlage biologisch nicht weiter abbaubare CSB wird an Aktivkohle adsorbiert.

Die Fällungs- und Adsorptionsmittel können auch in die Kammern 32 oder 33 eingespeist werden; dies ist durch die Pfeile 15' und 15'' angedeutet. Mit Vorteil erfolgt eine weitere Zugabe von Eisen- oder Aluminiumsalzlösungen, um das Gemisch aus Wasser und Nitrifikanten, suspendierter Aktivkohle sowie ausgefällter Eisen- oder Aluminiumphosphaten zu entstabilisieren.

Nach der Nitrifikation gelangt das Schlamm-Wasser-Gemisch über die Verbindung 36 in den Flockungsraum 5, wobei - falls erforderlich - aus dem Reservoir 51 durch die Dosiervorrichtung 52 Flockungshilfsmittel 55 zugegeben werden kann. Mit dem aus Polyelektrolyten bestehenden Flockungshilfsmittel lässt sich der Kontaktschlamm gegebenenfalls in gut sedimentierbare Flockenstrukturen überführen. Anschliessend gelangt das Gemisch über die Verbindung 56 in den Trennraum 6, in welchem bei der Passage (Pfeile 65a, 65b) das Klarwasser 55 (Überlauf 64, Ausgang 66a) vom Kontaktschlamm (Ausgang 66b) separiert wird. Der in einem Überschuss vorliegende Kontaktschlamm 69 wird in die nicht dargestellte Kläranlage gefördert, und zwar entweder in ein Vorklärbecken, in ein Belebungsbecken oder aber auch in eine Schlammentwässerung, wo er mit dem übrigen Schlamm entwässert wird.

Im Filterbett 71 der Filtereinrichtung 7 (Zwischenboden 71a) werden Feinstflocken aus dem Klarwasser 55 entfernt. Ein Teil 78 des Produktwassers 75 wird in das Spülwasser-Reservoir 8 abgezweigt. Mit dem durch die Pumpe 80 geförderten Spülwasser 85 wird das Filterbett 71 periodisch gewaschen. Anschliessend an das Spülen lässt man durch Öffnen der Schlammklappe 72 das Spülabwasser 79 in das Reservoir 9 fliessen.

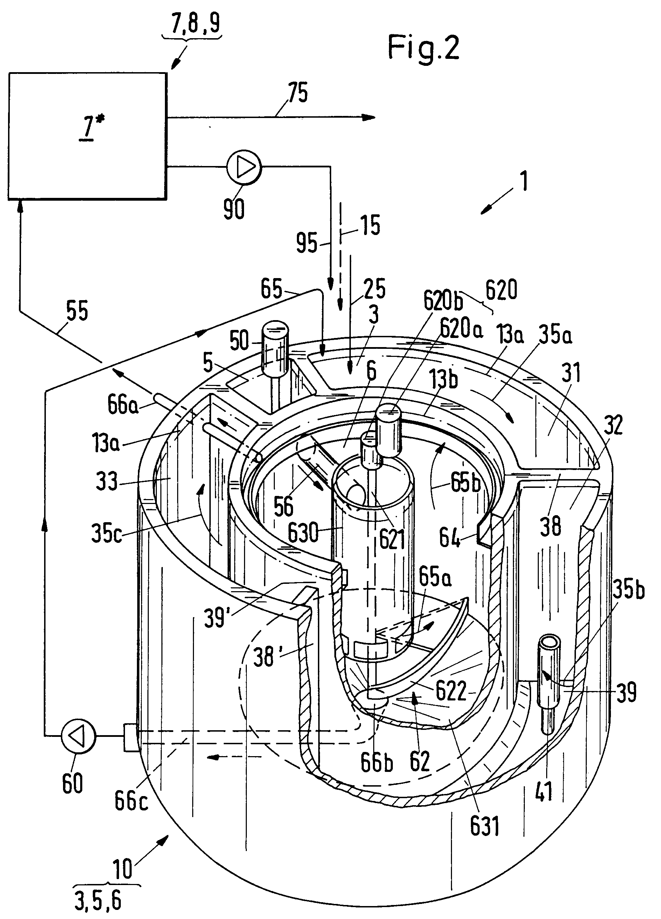

Der in Fig.2 perspektivisch dargestellte Teil 10 der erfindungsgemässen Einrichtung 1 umfasst den Trennraum 6 und die Kammern 31, 32, 33 des Reaktionsraum 3 sowie den Flockungsraum 5, die ringförmig angeordnet sind und die den Trennraum 6 umgeben. Zwischen den Kammern 31 und 32 befindet sich die Wand 38, die am Boden eine Durchgangsöffnung 39 frei lässt. Bei der Wand 38' zwischen den Kammer 32 und 33 ist der Durchgang 39' oben angeordnet. Mit den Pfeilen 35a, 35b und 35c ist entsprechend zur Fig.1 die Transportrichtung des Schlammgemisches angegeben. Es ist lediglich ein Rohrbelüfter 41 in der Kammer 32 dargestellt.

Über dem Flockungsraum 5 ist eine zum Zentrum führende Brücke vorgesehen, die der Übersichtlichkeit halber nicht dargestellt ist. Auf dieser Brücke sind der Rührerantrieb 50 und der Antrieb 620 (Motor 620a, Getriebe 620b), der einem Räumer 62 des Trennraums 6 zugeordnet ist, montiert.

Die Verbindung 56 am Ausgang des Flockungsraums 5 mündet in einen Einlaufzylinder 630, an dessen unteren Ende das Gemisch (Pfeil 65a) in den Trennraum 6 eintritt. Der abgesetzte Kontaktschlamm wird auf dem Boden 631, der vorzugsweise konisch ausgebildet ist, mittels des Räumerarms 622 (Welle 621) zum zentralen Ablauf 66b gefördert, wo er über die Ablaufleitung 66c zur Schlammpumpe 60 geleitet wird. Das geklärte Wasser (Pfeil 65b) fliesst in die Überlaufrinne 64, von wo es zum Ausgang 66a gelangt. Für eine effiziente Trennung werden mit Vorteil Einbauten, insbesondere Schrägklärer-Lamellen, vorgesehen, welche die nach oben strömende Flüssigkeit passieren muss. Es ist ferner vorteilhaft, wenn zusätzlich mit mindestens einer zweiten ringförmigen Überlaufrinne zwischen der Rinne 64 und dem Einlaufzylinder 630 für ein möglichst homogenes Strömungsfeld gesorgt wird.

Vom Ausgang 66a fliesst das Klarwasser 55 weiter zur schematisch angedeuteten Filtrieranlage 7*, welche die Filtereinrichtung 7 sowie die Reservoire 8 und 9 umfasst (siehe Fig.1). Das Spülabwasser wird über die Rückführung 95 und mittels der Pumpe 90 zum Einlauf des Reaktionsraums 3 gefördert, wo es mit dem Ablaufwasser 25 der Nachklärung, den Fällungs- und Adsorptionsmittel 15 sowie dem rückgeführten Kontaktschlamm 65 vermischt wird.

In Fig.2 ist am oberen Rand des Reaktionsraums 3 das Niveau des Flüssigkeitsspiegels mit strichpunktierten Linien 13a angegeben (ausgezogene Linie 13a in Fig.1). Das Niveau 13b in der Überlaufrinne 64 liegt natürlich - aufgrund von Reibungsverlusten beim Flüssigkeitstransport durch die Einrichtung 10 - einige Zentimeter tiefer als das Niveau 13a.

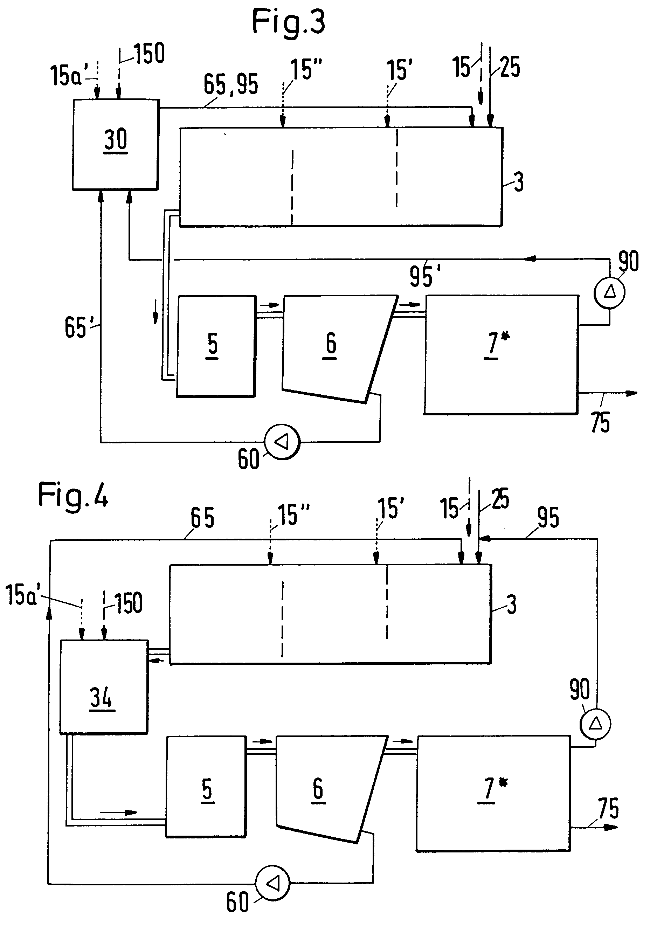

Die erfindungsgemässe Einrichtung 1 kann um eine Denitrifikationsstufe 30 bzw. 34 erweitert werden, die entweder dem belüfteten Reaktionsraum 3 vorgeschaltet (Fig.3) oder zwischen dem Reaktionsraum 3 und dem Flockungsraum 5 zwischengeschaltet ist (Fig.4). Bei vorgeschalteter Denitrifikationsstufe 30 werden die Rückführungen 65', 65 und 95', 95 des Kontaktschlamms bzw. des Spülabwassers durch die Denitrifikationsstufe 30 geführt (siehe Fig.3). Die Denitrifikationsstufen 30 oder 34 werden nicht belüftet (denn Nitrat ist Sauerstofflieferant); sie können aber bautechnisch gleichwohl an die Kaskadenanordnung des Reaktionsraums 3 angegliedert werden, beispielsweise als "nullte" Kaskadenkammer 30 oder als vierte Kaskadenkammer 34.

Die Denitrifikation wird unter Zugabe einer leicht biologisch verfügbaren Kohlenstoffquelle, beispielsweise Methanol oder Essigsäure, durchgeführt. Diese Zugabe ist in den Figuren 3 und 4 durch die Pfeile 150 angedeutet. Die Pfeile 15a' bedeuten, dass Fällungsmittel auch in die Denitrifikationsstufen 30 bzw. 34 eingespeist werden können. Eine weitergehende Beschreibung der Figuren 3 und 4 ist nicht nötig, da sie im wesentlichen lediglich - mit Ausnahme der Denitrifikationsstufen 30 und 34 - die aus den Figuren 1 und 2 bekannten Komponenten in vereinfachter Form wiedergeben.

## Patentansprüche

1. Anlage zum weitergehenden Reinigen von Wasser, das Ammonium sowie Schwebestoffe und/oder Phosphat und/oder Stoffe mit biologisch/chemisch abbaubarem Kohlenstoff enthält, welche Anlage aus einer biologischen Kläranlage mit Vorklärbecken, Belebungsbecken, Nachklärbecken (2) sowie Schlammentwässerung und einer nachgeschalteten Einrichtung (1) für die Behandlung von Ablaufwasser aus der Kläranlage besteht,
welche Einrichtung eine Mehrzahl von Teilräumen und Hilfsvorrichtungen umfasst, nämlich einen belüfteten Reaktionsraum (3), einen Flockungsraum (5), einen Trennraum (6) zum Separieren von Schlamm und Klarwasser, eine Rückführung (65) des Schlamms in den Zulauf des Reaktionsraums, eine dem Trennraum nachgeschaltete Filtereinrichtung (7) für das Klarwasser, eine Rückführung (95), mittels der Spülabwasser der Filtereinrichtung in den Reaktionsraum förderbar ist, sowie Dosiervorrichtungen (11, 12, 52) für Adsorptions-, Fällungs- und Flockungshilfsmittel,
wobei vorgesehen ist, dass im Reaktionsraum die Inhaltsstoffe des Ablaufwassers zumindest teilweise eliminierbar sind, nämlich durch Nitrifikation des Ammoniums und gegebenenfalls durch Fällung des Phosphats sowie durch Bindung weiterer Inhaltsstoffe an Adsorptionsmitteln, dass im Flockungsraum - falls erforderlich - suspendierte Feststoffpartikel durch Flockungshilfsmittel in gut sedimentierbare Flockenstrukturen überführbar sind und dass eine Rückführung für Überschussschlamm (69) vom Trennraum zur Kläranlage, insbesondere zum Belebungsbecken, vorgesehen ist.

2. Anlage nach Anspruch 1, dadurch gekennzeichnet, dass der Reaktionsraum (3) kaskadenartig in Kammern (31, 32, 33) gegliedert ist.

3. Anlage nach einem der Ansprüche 1 oder 2, dadurch gekennzeichnet, dass für die Belüftung (4) des Reaktionsraums (3) Rohrbelüfter (41) vorgesehen sind.

4. Anlage nach einem der Ansprüche 1 bis 3, dadurch gekennzeichnet, dass zusätzlich eine Denitrifikationsstufe (30; 34) vorgesehen ist, die entweder dem belüfteten Reaktionsraum (3) vorgeschaltet oder zwischen den Reaktionsraum und den Flockungsraum (5) zwischengeschaltet ist.

5. Anlage nach Anspruch 4 mit dem Reaktionsraum vorgeschalteter Denitrifikationsstufe (30), dadurch gekennzeichnet, dass die Rückführungen (65', 95') des Schlamms und des Spülabwassers durch die Denitrifikationsstufe führt.

6. Anlage nach einem der Ansprüche 1 bis 5, dadurch gekennzeichnet, dass der belüftete Reaktionsraum (3) drei Teilkammern (31, 32, 33) aufweist.

7. Anlage nach einem der Ansprüche 1 bis 6, dadurch gekennzeichnet, dass der Reaktionsraum (3), der Flockungsraum (5), der Trennraum (6) und gegebenenfalls die Denitrifikationsstufe (30; 34) in einen zylindrischen Behälter (10) integriert sind, wobei der Trennraum durch einen zentralen Zylinder gegeben ist und die übrigen Räume ringförmig um diesen inneren Zylinder angeordnet sind.

8. Anlage nach einem der Ansprüche 1 bis 7, dadurch gekennzeichnet, dass die Rückführung für den Überschussschlamm (69) in das Vorklärbecken mündet.

9. Anlage nach einem der Ansprüche 1 bis 7, dadurch gekennzeichnet, dass die Rückführung für den Überschussschlamm (69) in die Schlammentwässerung führt.

10. Verfahren zum weitergehenden Reinigen von Wasser mit einer Anlage nach einem der Ansprüche 1 bis 9, dadurch gekennzeichnet; dass im Reaktionsraum (3) die Inhaltsstoffe des Ablaufwassers zumindest teilweise eliminiert werden, nämlich durch Nitrifikation des Ammoniums und gegebenenfalls durch Fällung des Phosphats sowie durch Bindung weiterer Inhaltsstoffe an Adsorptionsmitteln, wobei in Abhängigkeit von der Phosphatkonzentration und vom CSB Metallsalze als Fällungsmittel bzw. Aktivkohle als Adsorptionsmittel zudosiert werden, und dass im Flockungsraum (5) gegebenenfalls Flockungshilfsmittel in Form von Polyelektrolyten zudosiert werden

11. Verfahren nach Anspruch 10, dadurch gekennzeichnet, dass die Fällungs- und Adsorptionsmittel dem Zulauf des Reaktionsraums zugeführt werden.

12. Verfahren nach Anspruch 10 oder 11 und mit einer Anlage nach Anspruch 4 oder 5, dadurch gekennzeichnet, dass die Denitrifikation unter Zugabe einer leicht biologisch verfügbaren Kohlenstoffquelle, beispielsweise Methanol oder Essigsäure, durchgeführt wird.

## Claims

1. A plant for the advanced purification of water, which contains ammonium and also suspended matter and/or phosphate and/or substances with biologically/chemically decomposable carbon, which plant consists of a biological waste water treatment plant with a preliminary sedimentation tank, activated sludge tank, final sedimentation tank (2) and also sludge dewatering and an installation (1) disposed thereafter for the treatment of effluent water from the waste water treatment plant, which installation comprises a plurality of partial chambers and auxiliary devices, i.e. an aerated reaction area (3), a flocculation chamber (5), a separating chamber (6) for separating sludge and clarified water, a recirculating pipe (65) for the sludge into the inlet of the reaction area, a filtering device (7) disposed after the separating chamber for the clarified water, a recirculating pipe (95), by means of which waste rinse water from the filtering device can be transported into the reaction area, and also metering devices (11, 12, 52) for adsorption, precipitation and coagulant aids,
whereby it is specified
**that** in the reaction area the constituents of the effluent water can be eliminated at least partially, i.e. by the nitrification of the ammonium and optionally by the precipitation of the phosphate and also by binding further constituents to adsorption agents,
**in that** in the flocculation chamber - if necessary - suspended solids particles can be converted by coagulant aids into easily sedimentable floc structures,
**and in that** a recirculating pipe is provided for excess sludge (69) from the separating chamber to the activated sludge tank.

2. A plant according to Claim 1,
**characterised in that** the reaction area (3) is divided in cascade fashion into chambers (31, 32, 33).

3. A plant according to one of Claims 1 or 2,
**characterised in that** pipe air-release valves (41) are provided for the aeration (4) of the reaction area (3).

4. A plant according to one of Clams 1 to 3,
**characterised in that** in addition a denitrification stage (30; 34) is provided, which is either disposed in front of the aerated reaction area (3) or is disposed between the reaction area and the flocculation chamber (5).

5. A plant according to Claim 4 having a denitrification stage (30) disposed in front of the reaction area,
**characterised in that** the recirculating pipes (65', 95') for the sludge and for the rinse water pass through the denitrification stage.

6. A plant according to one of Claims 1 to 5,
**characterised in that** the aerated reaction area (3) comprises three partial chambers (31, 32, 33).

7. A plant according to one of Claims 1 to 6,
**characterised in that** the reaction area (3), the flocculation chamber (5), the separating chamber (6) and optionally the denitrification stage (30; 34) are integrated into a cylindrical tank (10), with the separating chamber being formed by a central cylinder and the remaining areas being disposed in a circle around said inner cylinder.

8. A plant according to one of Claims 1 to 7,
**characterised in that** the recirculating pipe for excess sludge (69) leads into the preliminary sedimentation tank.

9. A plant according to one of Claims 1 to 7,
**characterised in that** the recirculating pipe for the excess sludge (69) leads into the sludge dewatering.

10. A process for the advanced purification of water with a plant according to one of Claims 1 to 9,
**characterised in that** in the reaction area (3) the constituents of the effluent water are at least partially eliminated, i.e. by nitrification of the ammonium and optionally by precipitation of the phosphate and by binding of further constituents to adsorption agents, with metal salts being added in metered doses as the precipitation agent and activated carbon as the adsorption agent respectively as a function of the phosphate concentration and of the COD,
**and in that** in the flocculation chamber (5) coagulant aids are optionally added in metered doses in the form of polyelectrolytes.

11. A process according to Claim 10,
**characterised in that** the precipitation and adsorption agents are supplied to the inlet of the reaction area.

12. A process according to Claim 10 or 11 and with a plant according to Claim 4 or 5,
**characterised in that** denitrification is performed with the addition of an easily available biological carbon source, for example methanol or acetic acid.

## Revendications

1. Installation pour la purification poussée de l'eau qui contient de l'ammonium ainsi que des matières en suspension et/ou du phosphate et/ou des matières avec du carbone décomposable biologiquement/chimiquement, laquelle installation se compose d'une installation de clarification biologique avec bassin de préclarification, bassin d'activation, bassin de clarification finale (2) ainsi qu'une déshydratation de boue et d'un dispositif (1) qui suit pour le traitement de l'eau déchargée de l'installation de clarification,
lequel dispositif comporte un certain nombre d'espaces partiels et d'appareils auxiliaires, c'est-à-dire un espace de réaction aéré (3), un espace de floculation (5), un espace de séparation (6) pour la séparation de la boue et de l'eau clarifiée, une conduite de retour (65) de la boue dans l'admission de l'espace de réaction, un dispositif de filtration (7) suivant l'espace de séparation pour l'eau clarifiée, une conduite de retour (95), au moyen de laquelle l'eau résiduaire de nettoyage du dispositif de filtration peut être fournie à l'espace de réaction, ainsi que des dispositifs de dosage (11, 12, 52) pour les agents d'adsorption, de précipitation et de floculation,
et il est prévu que dans l'espace de réaction, les contenus de l'eau déchargée soient au moins partiellement éliminés, c'est-à-dire par nitrification de l'ammonium et le cas échéant par précipitation du phosphate ainsi que par liaison des autres contenus aux agents d'adsorption, que, dans l'espace de floculation, dans le cas où cela est nécessaire, des particules de matière solide en suspension puissent être transformées par l'agent de floculation en structures de flocons se sédimentant bien et qu'une conduite de retour pour la boue en excès (69) soit prévue de l'espace de séparation à l'installation de clarification, en particulier vers le bassin d'activation.

2. Installation selon la revendication caractérisée en ce que l'espace de réaction (3) est démembré en chambres en cascade (31, 32, 33).

3. Installation selon l'une des revendications 1 ou 2, caractérisée en ce que pour l'aération (4) de l'espace de réaction (3) sont prévus des aérateurs tubulaires (41).

4. Installation selon l'une quelconque des revendications 1 à 3, caractérisée en ce qu'en supplément, un étage de dénitrification (30; 34) est prévu, qui soit précède l'espace de réaction aéré (3) ou bien est placé entre l'espace de réaction et l'espace de floculation (5).

5. Installation selon la revendication 4 avec l'étage de dénitrification (30) prévu avant l'espace de réaction, caractérisée en ce que les conduites de retour (65', 95') de la boue et de l'eau résiduaire de nettoyage passent à travers l'étage de dénitrification.

6. Installation selon l'une des revendications 1 à 5, caractérisée en ce que l'espace aéré de réaction (3) présente trois chambres partielles (31, 32, 33).

7. Installation selon l'une des revendications 1 à 6, caractérisée en ce que l'espace de réaction (3), l'espace de floculation (5), l'espace de séparation (6) et le cas échéant l'étage de dénitrification (30; 34) sont intégrés dans un récipient cylindrique (10), l'espace de séparation étant donné par un cylindre central et les espaces restants étant agencés en cercle autour de ce cylindre interne.

8. Installation selon l'une des revendications 1 à 7, caractérisée en ce que la conduite de retour pour la boue en excès (69) débouche dans le bassin de préclarification.

9. Installation selon l'une des revendications 1 à 7, caractérisée en ce que la conduite de retour pour la boue en excès (69) conduit dans la déshydratation de la boue.

10. Procédé pour la purification poussée d'eau avec une installation selon l'une des revendications 1 à 9, caractérisé en ce que, dans l'espace de réaction (3), les matières contenues dans l'eau déchargée sont au moins partiellement éliminées, c'est-à-dire par nitrification de l'ammonium et le cas échéant par précipitation du phosphate ainsi que par liaison des autres matières contenues à des agents d'adsorption, et on dose selon la concentration en phosphate et selon BCO, les sels métalliques en tant qu'agent de précipitation ou respectivement le charbon activé en tant qu'agent d'adsorption, et en ce que dans l'espace de floculation (5), un agent de floculation peut être dosé, le cas échéant sous la forme de polyélectrolytes.

11. Procédé selon la revendication 10, caractérisé en ce que les agents de précipitation et d'adsorption sont conduits à l'entrée de l'espace de réaction.

12. Procédé selon la revendication 10 ou 11 et avec une installation selon la revendication 4 ou 5, caractérisé en ce que la dénitrification est accomplie avec addition d'une source de carbone facilement disponible biologiquement, par exemple du méthanol ou de l'acide acétique.
